# EUROPÄISCHE PATENTSCHRIFT

(11) **EP 0 840 321 B1**
(45) Veröffentlichungstag und Bekanntmachung des Hinweises auf die Patenterteilung: **29.08.2007**
(21) Anmeldenummer: 97203356.7
(22) Anmeldetag: 29.10.1997
(51) Int. Cl.: G11B 33/04

(54) **Gehäuse zur Aufnahme mindestens eines plattenförmigen Informationsträgers**
Storage case for at least one disc-shaped information carrier
Boîtier de rangement pour au moins un support d'information en forme de disque

(30) Priorität: 02.11.1996 DE 19645275
(43) Veröffentlichungstag der Anmeldung: 06.05.1998
(73) Patentinhaber: Philips Intellectual Property & Standards GmbH, 20099 Hamburg (DE); Koninklijke Philips Electronics N.V., 5621 BA Eindhoven (NL)
(72) Erfinder: Ganser, Christa, Röntgenstrasse 24, 22335 Hamburg (DE); Schrader, Karen, Röntgenstrasse 24, 22335 Hamburg (DE); van Eupen, Hartmut, Röntgenstrasse 24, 22335 Hamburg (DE); Pfeiffer, Hartmut, Röntgenstrasse 24, 22335 Hamburg (DE)
(74) Vertreter: von Laue, Hanns-Ulrich

(56) Entgegenhaltungen:
- DE-A- 4 342 865
- DE-U- 29 607 929
- DE-U- 29 610 914
- US-A- 5 383 553
- US-A- 5 544 741

## Beschreibung

Die Erfindung bezieht sich auf ein Gehäuse zur Aufnahme mindestens eines plattenförmigen Informationsträgers, z.B. einer CD, mit einem Bodenteil, einem Deckelteil und einem von dem Gehäuse aufgenommenen Tragteil zur Halterung des Informationsträgers, wobei das Tragteil eine hochgezogene Grifflasche aufweist, die bei geschlossenem Gehäuse in eine Aussparung des Deckelteiles ragt.

Ein derartiges Gehäuse ist z. B. durch die DE 3725616 A1, oder US5.544.741A, bekannt geworden. Dabei wird unterhalb der hochgezogenen Grifflasche ein Hohlraum gebildet, der einerseits von den Wandungen der Griffleiste und andererseits von den Wandungen des Bodenteiles begrenzt wird. Ferner ist dabei das etwa quadratisch ausgebildete Tragteil mit einer kreisförmigen Mulde zur Aufnahme des Informationsträgers versehen. Dadurch werden in den vier Eckbereichen des etwa quadratischen Tragteiles vier weitere, etwa dreieckförmige Hohlräume gebildet, die von Wandungen des Tragteiles und des Bodenteiles begrenzt werden.

Der Erfindung liegt die Aufgabe zugrunde, bei einem Gehäuse der eingangs genannten Art die Hohlräume zur Verbesserung der Qualität des Gehäuses auszunutzen, und zwar einerseits hinsichtlich der Stabilität des Gehäuses und andererseits hinsichtlich der besseren Unterscheidbarkeit verschiedener Gehäuse bzw. der von den Gehäusen aufgenommene Informationsträger.

Diese Aufgabe wird gemäß der Erfindung dadurch gelöst, daß in mindestens einem in dem Gehäuse gebildeten Hohlraum ein dem Hohlraum angepaßter, mit einer Substanz auffüllbarer, geschlossener Behälter angeordnet ist. Dieser Behälter ist dem Hohlraum angepaßt und dient damit zur Erhöhung der Stabilität des Gehäuses. Ferner kann die von dem Behälter aufgenommene Substanz zusätzlich zur Erhöhung der Stabilität beitragen. Je nach Art der Substanz kann ferner dadurch eine Möglichkeit geschaffen werden, gleichartige Gehäuse, deren Behälter mit unterschiedlichen Substanzen gefüllt sind, auf einfache Weise leicht und problemlos zu unterscheiden.

In Ausgestaltung der Erfindung ist vorgesehen, daß in dem von der Grifflasche und benachbarten Wandungen des Bodenteils und des Tragteiles gebildeten Hohlraum ein stabförmiger Behälter angeordnet ist, der z. B. in weiterer Ausgestaltung der Erfindung einen runden oder eckigen Querschnitt aufweist. Ein derartiger stabförmiger Behälter im empfindlichen Scharnierbereich dient zur Erhöhung der Stabilität des Gehäuses. Der stabförmige Behälter kann leicht eingebracht werden, indem er vor Montage des Tragteiles in das Bodenteil eingebracht wird und so dann das Tragteil in das Bodenteil eingeklemmt wird. Dabei wird der Behälter von der Grifflasche und von den Wandungen des Tragteiles und des Bodenteiles in seiner Lage gehalten.

In weiterer Ausgestaltung der Erfindung kann der Behälter in dem Hohlraum durch Klemmwirkung oder durch Kleben gehalten werden, wobei der Behälter entweder in das Bodenteil oder in das Tragteil unterhalb der erhöhten Grifflasche eingeklebt wird. Dadurch kann die Stabilität weiter erhöht werden. Das Einkleben eignet sich z.B. vorteilhaft bei solchen Gehäusen, bei denen das Tragteil ausklappbar angeordnet und zur beidseitigen Halterung von zwei CD's ausgebildet ist.

Bei einem Gehäuse, bei welchem das Tragteil durchsichtig ausgebildet ist, ist in weiterer Ausgestaltung der Erfindung vorgesehen, daß der Behälter durchsichtig ausgebildet und mit einer flüssigen Substanz, z.B. Wasser gefüllt ist. Da die durchsichtige Grifflasche des Tragteiles bei geschlossenem Gehäuse in einer Aussparung des Deckelteiles liegt, ist die in dem durchsichtigen Behälter unterhalb der Grifflasche liegende Substanz in dem stabförmigen Behälter sofort erkennbar, so daß durch die in dem Behälter befindliche Substanz eine sofortige Identifikation stattfinden kann. Eine vorteilhafte Ausgestaltung zur leichten Identifikation ist durch eine farbige Substanz gekennzeichnet.

Zur effektvollen Identifikation ist in weiterer Ausgestaltung vorgesehen, daß die flüssige Substanz Luftblasen enthält, die bei einer Bewegung des Gehäuses innerhalb des Behälters wandern.

Eine weitere vorteilhafte Ausgestaltung der Erfindung besteht darin, daß die Substanz mit Schwebeteilchen versetzt ist. Derartige Schwebeteilchen wandern bei Bewegung des Gehäuses innerhalb des Behälters, da ihr spezifisches Gewicht vorzugsweise kleiner ist als das der Substanz. Ein derartiger Effekt ist an sich bekannt durch die sogenannten Schneekugeln, bei denen in Wasser befindliche glitzernde Teilchen bei Bewegung der Kugel einen Effekt bewirken, als würde innerhalb der Kugel Schnee fallen. So ist eine weitere Ausgestaltung der Erfindung gekennzeichnet durch unregelmäßige, glitterartige Schwebeteilchen, die den besagten Schneefall-Effekt bewirken.

Eine weitere Ausgestaltung der Erfindung ist gekennzeichnet durch regelmäßig ausgebildete Schwebeteilchen in Form von Figuren, z.B. Tierkreiszeichen, kleine Herzen, Buchstaben oder dergleichen.

Die Behälter zur Aufnahme der Substanz sind vorzugsweise aus Kunststoff hergestellt. In einer weiteren Ausgestaltung der Erfindung ist vorgesehen, daß der stabförmige Behälter an einer seiner Stirnflächen mit einem durch einen Pfropfen verschlossenen Einfüllstutzen versehen ist und daß der in den Behälter ragende Teil des Einfüllstutzens zu den benachbarten Seitenwandungen des Behälters hin beabstandet angeordnet ist. Auf diese Weise wird erreicht, daß bei senkrechter Halterung des Gehäuses und bei unten angeordnetem Einfüllstutzen der in dem Behälter liegende Teil des Einfüllstutzens im Ruhezustand völlig von den herab gerieselten Schwebeteilchen umgeben und so nicht mehr sichtbar ist.

Es wäre auch denkbar, zusätzlich zu dem unterhalb der Grifflasche befindlichen Hohlraum weitere Hohlräume innerhalb des Gehäuses für die oben genannten Zwecke auszunutzen. Derartige Räume gibt es z.B. bei einer Bauart, bei welcher das Tragteil mit einer Mulde zur Aufnahme des Informationsträgers versehen ist.
Bei einer solchen Bauart werden in den vier Ecken des Tragteiles etwa dreieckförmige Hohlräume gebildet, die von dem Tragteil und dem Bodenteil begrenzt sind. Auch in diesen Hohlräumen könnten etwa dreieckförmige Behälter untergebracht werden, die ebenfalls zur Erhöhung der Stabilität und zur leichteren Identifikation ausgenutzt werden könnten. Auch derartige dreieckförmige Behälter können in den genannte Hohlräumen entweder von den genannte Wandungen gehalten oder eingeklemmt oder in das Träger- oder Bodenteil eingeklebt werden. Auch diese Behälter können mit farbigen Substanzen und darin eingelagerten Schwebeteilchen gefüllt sein. Derartige Behälter wären jedoch bei einem durchsichtigen Tragteil bei geschlossenem Gehäuse nicht sichtbar, da sie dann von dem Deckelteil mit Einlegeblatt verdeckt würden. Erst bei Öffnen des Gehäusen durch Herausschwenken des Deckels wären derartige Behälter in den vier Eckbereichen des durchsichtigen Tragteiles erkennbar.

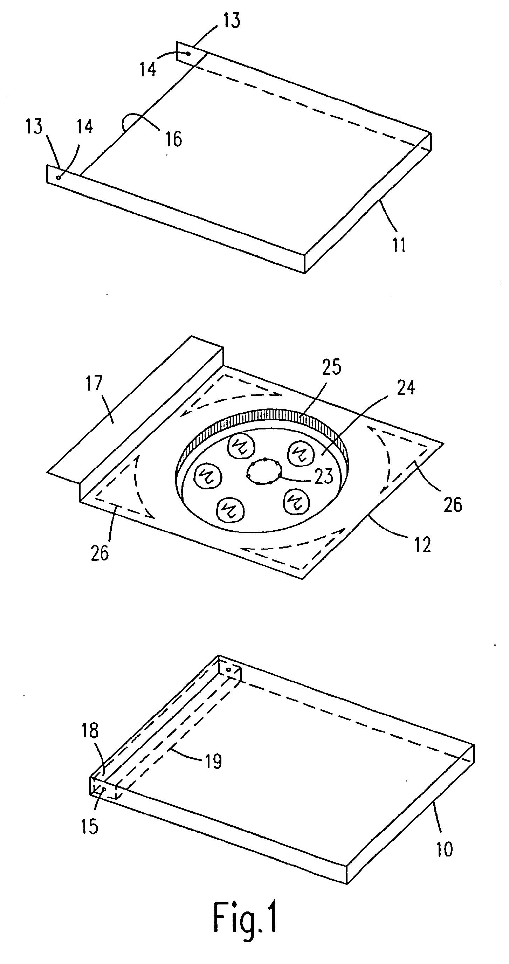

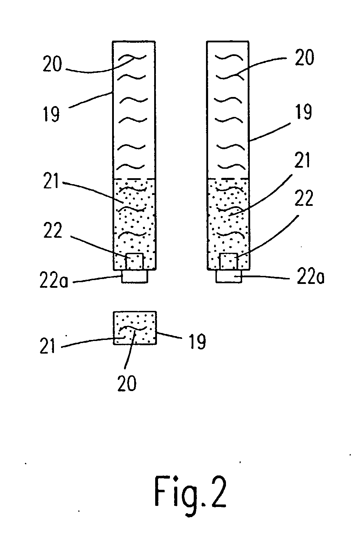

In der Zeichnung ist in Fig. 1 und 2 ein Ausführungsbeispiel des Gegenstands gemäß der Erfindung schematisch dargestellt.

Fig. 1 zeigt in einer perspektivischen, auseinander gezogenen Darstellung ein Gehäuse zur Aufnahme einer CD und Fig. 2 zeigt in drei Darstellungen einen in das Gehäuse gemäß Fig. 1 einsetzbaren Behälter.

Gemäß Fig. 1 besteht das Gehäuse aus einem Bodenteil 10, einem Deckelteil 11 und einem durch Verrastung in das Bodenteil 10 einsetzbaren Tragteil 12. Das Deckelteil 11 besitzt zwei Laschen 13 mit zwei nach innen ragenden Zapfen 14, die in entsprechende Löcher 15 des Bodenteiles 10 eingreifen und somit eine Scharnierverbindung zwischen Deckelteil 11 und Bodenteil 10 bilden. In zusammengebautem Zustand besitzt das Gehäuse wegen der vorragenden Laschen 13 eine vom Deckelteil 11 gebildete Aussparung 16, in welche bei zusammengebautem Gehäuse eine hochgezogene Grifflasche 17 des Tragteiles 12 eingreift, so daß das Gehäuse allseitig verschlossen ist. Unterhalb der Grifflasche 17 wird in zusammengebautem Zustand ein Hohlraum 18 gebildet, der von der Grifflasche 17 und von Wandungen des Tragteiles 12 und des Bodenteiles 10 begrenzt wird. In diesen Hohlraum 18 in der unteren Darstellung gemäß Fig. 1 wird ein im Querschnitt etwa rechteckförmiger, gestrichelt dargestellter Behälter 19 eingesetzt, der in zusammengebautem Zustand des Gehäuses von der Grifflasche 17 und den Wandungen des Tragteiles 12 und des Bodenteiles 10 gehalten wird.

Dieser Behälter 19 ist in Fig. 2 in drei Darstellungen dargestellt. Der Behälter ist aus durchsichtigem Kunststoff gefertigt und im vorliegenden Beispiel vollständig mit Wasser 20 gefüllt. In dem Wasser befinden sich Schwebeteilchen 21, und zwar sogenannte Schnee-Glitterteilchen, die in der Ruhelage gemäß Fig. 2 nach unten gesunken sind und den unteren Teil des Behälters 19 ausfüllen. Der Behälter 19 ist mit einem in den Behälter ragenden Einfüllstutzen 22 versehen, der durch einen Pfropfen 22a verschlossen wird. Der Durchmesser des in dem Behälter befindlichen Einfüllstutzen 22 ist so klein, daß er im Ruhezustand der Flüssigkeit allseitig von den darin befindlichen Schwebeteilchen 21 umgeben und somit nicht mehr sichtbar ist.

Bei Bewegung des Gehäuses mit dem eingesetzten Behälter 19 verteilt sich der Schnee-Glitter 21 in dem Behälter und erzeugt den Effekt eines rieselnden Schnees. Anstelle der Schnee-Glitterteilchen 21 können auch andere beliebig geformte Teilchen verwendet werden, z.B. Tierkreiszeichen, Teilchen in Herzform oder dgl.

Das Tragteil 12 gemäß Fig. 1 besitzt eine zentral angeordnete Halterung 23 zur Halterung einer CD 24, die in einer Mulde 25 des Tragteiles 12 liegt. In Folge dieser Mulde entstehen in den vier Eckbereichen des etwa quadratischen Tragteiles 12 vier Hohlräume 26, in welchen ebenfalls entsprechend dreieckförmig geformte Behälter untergebracht werden könnten, die ebenfalls mit einer flüssigen Substanz und darin eingelagerten Schwebeteilchen gefüllt sein können.

## Patentansprüche

1. Gehäuse zur Aufnahme mindestens eines plattenförmigen Informationsträgers (24), z.B. einer CD, mit einem Bodenteil (10), einem Deckelteil (11) und einem von dem Gehäuse aufgenommenen Tragteil (12) zur Halterung des Informationsträgers (24), wobei das Tragteil (12) eine hochgezogene Grifflasche (17) aufweist, die bei geschlossenem Gehäuse in eine Aussparung (16) des Deckelteils (11) ragt, **dadurch gekennzeichnet, daß** in mindesten einem in dem Gehäuse gebildeten Hohlraum (18) ein dem Hohlraum angepaßter, mit einer Substanz (20) füllbarer, geschlossener Behälter (19) angeordnet ist.

2. Gehäuse nach Anspruch 1, **dadurch gekennzeichnet, dass** ein stabförmiger Behälter (19) in dem von der Grifflasche (17) und den Wänden des Bodenteils (10) gebildeten Hohlraum (18) angeordnet ist.

3. Gehäuse nach Anspruch 1 oder 2, **dadurch gekennzeichnet, dass** der Behälter (19) von den Wandungen des Bodenteils (10) und des Tragteils (12), die den Hohlraum (18) umgeben, gehalten wird.

4. Gehäuse nach Anspruch 1 oder 2, **dadurch gekennzeichnet, daß** der Behälter (19) durch Klemmwirkung in dem Hohlraum (18) gehalten wird.

5. Gehäuse nach Anspruch 1 oder 2, **dadurch gekennzeichnet, daß** der Behälter in das Bodenteil (10) oder in das Tragteil (12) unterhalb der Griffleiste (17) eingeklebt ist.

6. Gehäuse nach einem der Ansprüche 1 bis 5, **dadurch gekennzeichnet, daß** der stabförmige Behälter (19) an einer seiner Stirnflächen mit einem durch einen Propfen (22a) verschlossenen Einfüllstutzen (22) versehen ist und daß der in den Behälter (19) ragende Teil des Einfüllstutzens (22) von den benachbarten Seitenwandungen des Behälters (19) beabstandet angeordnet ist.

7. Gehäuse nach einem der Ansprüche 1 bis 7, **dadurch ,gekennzeichnet, dass** das Tragteil (12) und der Behälter (19) durchsichtig ausgestaltet sind und dass der Behälter mit einer flüssigen Substanz (20) gefüllt ist.

8. Gehäuse nach Anspruch 7, **gekennzeichnet durch** eine farbige Substanz.

9. Gehäuse nach Anspruch 7 oder 8, **dadurch gekennzeichnet, daß** die Substanz (20) Luftblasen enthält.

10. Gehäuse nach Anspruch 7, 8 oder 9, **dadurch gekennzeichnet, daß** die Substanz (20) mit Schwebeteilchen (21) versetzt ist.

11. Gehäuse nach einem der Ansprüche 7 bis 9, **gekennzeichnet durch** unregelmäßige, glitterartige Schwebeteilchen (21).

12. Gehäuse nach einem der Ansprüche 7 bis 10, **gekennzeichnet durch** regelmäßig ausgebildete Schwebeteilchen in Form von Figuren, Sternzeichen, Buchstaben oder dergleichen.

## Claims

1. A storage case for accommodating at least one disc-shaped information carrier (24), for example a CD, with a bottom part (10), a lid part (11), and a support part (12) held by the storage case for retaining the information carrier (24), which support part (12) comprises a raised side grip (17) which enters a recess (16) of the lid part (11) when the storage case is closed, **characterized in that** a closed reservoir (19) is arranged in at least one hollow space (18) formed in the storage case, which reservoir is adapted to fit said hollow space and can be filled with a substance (20).

2. A storage case as claimed in Claim 1, **characterized in that** a rod-shaped reservoir (19) is arranged in the hollow space (18) formed by the side grip (17) and the walls of the bottom part (10) and of the support part (12).

3. A storage case as claimed in Claim 1 or 2, **characterized in that** the reservoir (19) is retained by the walls of the bottom part (10) and of the support part (12), which walls surround the hollow space (18).

4. A storage case as claimed in Claim 1 or 2, **characterized in that** the reservoir (19) is retained in the hollow space (18) by a clamping action.

5. A storage case as claimed in Claim 1 or 2, **characterized in that** the reservoir is fastened with glue into the bottom part (10) or the support part (12) below the side grip (17).

6. A storage case as claimed in any one of Claims 1 to 5, **characterized in that** the rod-shaped reservoir (19) is provided with a filling tube (22) closed by a plug (22a) at one of its end faces, and **in that** the portion of the filling tube (22) projecting into the reservoir (19) is arranged so as to be at a distance from the adjoining side walls of the reservoir (19).

7. A storage case as claimed in any one of the Claims 1 to 6, **characterized in that** the support part (12) and the reservoir (19) are transparent, and **in that** the reservoir is filled with a liquid substance (20).

8. A storage case as claimed in Claim 7, **characterized by** a colored substance.

9. A storage case as claimed in Claim 7 or 8, **characterized in that** the substance (20) contains air bubbles.

10. A storage case as claimed in Claim 7, 8 or 9, **characterized in that** the substance (20) is mixed with floating particles (21).

11. A storage case as claimed in any one of the Claims 7 to 9, **characterized by** irregular, shiny floating particles (21).

12. A storage case as claimed in any one of the Claims 7 to 10, **characterized by** regularly shaped floating particles in the form of figures, signs of the zodiac, letters, or the like.

## Revendications

1. Boîtier de logement d'au moins un support d'information en forme de disque (24), p. ex. d'un CD, avec une partie de fond (10), une partie de couvercle (11) une partie de support (12) logée par le boîtier en vue du maintien du support d'information (24), la partie de support (12) présentant une patte de prise (17) relevée qui déborde lorsque le boîtier est fermé dans un évidement (16) de la partie de couvercle (11) **caractérisé en ce qu'**un récipient (19) fermé à remplir d'une substance (20) et adapté à la cavité est disposé dans une cavité (18) formée dans le boîtier.

2. Boîtier selon la revendication 1, **caractérisé en ce qu'**un récipient (19) en forme de bâtonnet est disposé dans la cavité (18) formée par la patte de prise (17) et les parois de la partie de fond (10).

3. Boîtier selon l'une des revendications 1 ou 2, **caractérisé en ce que** le récipient (19) est maintenu par les parois de la partie de fond (10) et la partie de support (12) qui entourent la cavité (18).

4. Boîtier selon l'une des revendications 1 ou 2, **caractérisé en ce que** le récipient (19) est maintenu par l'effet de serrage dans la cavité (18).

5. Boîtier selon l'une des revendications 1 ou 2, **caractérisé en ce que** le récipient est collé dans la partie de fond (10) ou dans la partie de support (12) en dessous de la patte de prise (17).

6. Boîtier selon l'une des revendications 1 à 5, **caractérisé en ce que** le récipient en forme de bâtonnet (19) est doté sur une de ses faces d'about d'une tubulure de remplissage (22) fermée par un bouchon (22 a) et que la partie de la tubulure de remplissage (22) débordant dans le récipient (19) est espacée des parois latérales voisines du récipient (19).

7. Boîtier selon l'une des revendications 1 à 7, **caractérisé en ce que** la partie de support (12) et le récipient (19) sont de conception transparente et que le récipient est rempli d'une substance liquide (20).

8. Boîtier selon la revendication 7, **caractérisé par** une substance de couleur.

9. Boîtier selon l'une des revendications 7 ou 8, **caractérisé en ce que** la substance (20) contient des bulles d'air.

10. Boîtier selon l'une des revendications 7, 8 ou 8, **caractérisé en ce que** la substance (20) est remplie de particules flottantes (21).

11. Boîtier selon l'une des revendications 7 à 9, **caractérisé par** des particules flottantes (21) scintillantes irrégulières.

12. Boîtier selon l'une des revendications 7 à 10, **caractérisé par** des particules flottantes de conception régulière sous la forme de formes, d'étoiles, de lettres, etc.
